# EUROPEAN PATENT SPECIFICATION

(11) **EP 4 394 614 B1**
(45) Date of publication and mention of the grant of the patent: **04.11.2026**
(21) Application number: 24175982.8
(22) Date of filing: 03.12.2014
(51) Int. Cl.: H04L 12/413, G06F 15/163, G06F 15/17, G06F 13/00, G06F 13/12, G06F 13/40

(54) **APPARATUS AND METHOD FOR LOW LATENCY SWITCHING**
VORRICHTUNG UND VERFAHREN ZUR NIEDRIGLATENZ-UMSCHALTUNG
APPAREIL ET PROCÉDÉ DE COMMUTATION À FAIBLE LATENCE

(30) Priority: 13.08.2014 AU 2014903158; 23.10.2014 AU 2014904247
(43) Date of publication of application: 03.07.2024
(62) Document number(s) of the earlier application(s) in accordance with Art. 76 EPC: 19206553.0 / 3 641 234; 14899656.4 / 3 130 107
(73) Proprietor: Arista Networks, Inc., Santa Clara, CA 95054 (US)
(72) Inventor: SNOWDON, David, Darlinghurst, New South Wales, 2010 (AU); THOMAS, Charles, Warrawee, New South Wales, 2120 (AU); McDAID, Scott, Bilgola Plateau, New South Wales, 2010 (AU); POWLES, Lindsay, Baulkham Hills, New South Wales, 2153 (AU)
(74) Representative: Hoffmann Eitle

(56) References cited:
- EP-A1- 0 669 764
- WO-A1-2008/101041
- US-A1- 2010 259 687
- US-A1- 2013 215 754

## Description

### Technical Field

The present invention relates to network data switching, and in particular to an efficient low latency data switch using a combination of one or more crosspoint switches with one or more logic function devices such as FPGAs or ASICs, to implement desired networking functionality.

### Background of the Invention

It is often desirable to take data packets from one source and to send the data packets to one or more of a number of possible destinations. This is the case in the downstream direction from a stock exchange, for example, where it is desirable for a number of machines such as stock traders' computers to potentially receive packets from the exchange.

In some applications it is appropriate to broadcast or multicast from one port to many ports. Multicast broadcasts every packet at the input of the device (the switch) to every output of the switch and can for example be achieved by use of a crosspoint switch. However, in other scenarios such as in the case of a packet switch, unicast communications between two endpoints should be private.

Addressable switching can be implemented in an integrated circuit by processing downstream packets using some mechanism (e.g. such as a content addressable memory in a traditional packet switch). Conventionally this involves receiving data on a single transceiver, checking the packet address, referring to a lookup table to identify a port associated with the address, and then directing the packet to only that port. This approach is based on the principle of optimising bandwidth usage, but requires relatively complex circuitry within the switch.

Current network switches require that the layer 1 (physical layer) data be converted to layer 2 (the data link layer) for address checking, before being returned to layer 1. Converting data from layer 1 to layer 2 requires data deserialization into a parallel stream because it is difficult to implement layer 2 features in a serial stream at the frequencies involved. This means that any layer 2 processing is much slower than layer 1, and layer 2 address checking introduces a significant delay of approximately 200-400 ns for even the fastest layer 2 network switches. When used for upstream aggregation of multiple traders' data traffic into a single stream, this requires use of a many-to-one switch such as an Ethernet switch in addition to a MetaConnect C16 switch from Metaniako LP, undesirably increasing latency. Moreover, network switches must often deal with both upstream and downstream data paths in a single device, complicating the signal paths and introducing clocking limitations. Many existing switches are designed in order to optimise bandwidth and flexibility of use amongst many use cases.

WO 2008/101041 A1 describes a routing switcher performing various soft signaling processing within the router using one or more internal soft media processors (central processing units) to enable flexible solutions. The routing switcher includes a plurality of inputs and outputs operably connected by a cross-point matrix where the inputs are dynamically coupled to one or more of the outputs. The routing switcher also includes a soft media processor connected to the cross-point matrix as well as being dynamically coupled between some inputs and outputs. The soft media processor receives a signal from an input via the cross-point matrix and performs one of at least two signaling processing functions resident on the soft media processor and outputs a processed signal from one or more of the routing switcher' s outputs.

US 2010/259687 A1 describes an image processing apparatus, an image processor including: a matrix switcher, wherein intersecting input and output lines are connected by crosspoint switches; a signal processing block connected to output lines on the upstream side, and input lines on the downstream side by reentry paths; and an output block connected to output lines on the upstream side. An external reentry settings unit sets a first and second port of the matrix switcher as external reentry output ports, the first port being a matrix switcher output port, and the second port being a matrix switcher input port. A reentry stage information generator generates reentry stage information, which indicates the stage of the internal signal processing path where a special function unit is logically positioned, and wherein the special function unit corresponds to the external reentry output ports of the signal processing block and the output block.

EP 0 669 764 A1 describes, in a video teleconferencing apparatus, line interfaces being connected to communication channels for receiving data-compressed integrated frame format signals from an adjacent video teleconferencing apparatus. Each of the integrated frame format signals contains the respective video frames of user terminals. Data decompression decoders are respectively connected to the interfaces for decompressing the data-compressed integrated frame format signals to produce data-decompressed integrated frame format signals. A controller, connected to the interfaces, receives control signals from the channels and produces an address signal. Extraction circuits are respectively connected to the decoders for extracting desired video frames from each of the data-decompressed integrated frame format signals in accordance with the address signal. The output signals of the extraction circuits are integrated by a video integrator and data-compressed by an encoder for transmission via the interface.

US 2013/215754 A1 describes one networking device including a switch module, a server, and a switch controller. The switch module has ports with a communications interface of a first type (CI1) and ports with a communications interface of a second type (CI2). The server, coupled to the switch module via a first CI2 coupling, includes a virtual CI1 driver, which provides a CI1 interface in the server, defined to exchange CI1 packets with the switch module via the first CI2 coupling. The virtual CI1 driver includes a first network device operating system (ndOS) program. The switch controller, in communication with the switch module via a second CI2 coupling, includes a second ndOS program controlling, in the switch module, a packet switching policy defining the switching of packets through the switch module or switch controller. The first and second ndOS programs exchange control messages to maintain a network policy for the switch fabric.

Any discussion of documents, acts, materials, devices, articles or the like which has been included in the present specification is solely for the purpose of providing a context for the present invention. It is not to be taken as an admission that any or all of these matters form part of the prior art base or were common general knowledge in the field relevant to the present invention as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

In this specification, a statement that an element may be "at least one of" a list of options is to be understood that the element may be any one of the listed options, or may be any combination of two or more of the listed options.

### Summary of the Invention

There is provided a method as set out in Claim 1. There is also provided a system as set out in Claim 10.

### Brief Description of the Drawings

An example of the invention will now be described with reference to the accompanying drawings, in which:
Figure 1 is a system schematic of the hardware used to implement one embodiment of the present invention;
Figure 2 illustrates handling of upstream data in the system of Figure 1;
Figure 3 illustrates handling of downstream data in the system of Figure 1;
Figure 4 illustrates broadcasting of downstream data in the system of Figure 1;
Figure 5 is a data flow diagram of another embodiment of the invention, providing reconfigurable downstream data filtering;
Figure 6 is a data flow diagram of another example which is not covered by the scope of the claims, providing reconfigurable upstream data filtering,
Figure 7 illustrates another embodiment in which more than one multiplexer is utilised in a single FPGA;
Figure 8a illustrates a fully cross-connected switch in accordance with another embodiment of the present invention, and Figure 8b illustrates handling of one packet in the embodiment of Figure 8a;
Figure 9 is a system schematic of the hardware used to implement one embodiment of the present invention;
Figure 10 is a system schematic of the hardware used to implement another embodiment of the present invention;
Figure 11 is a system schematic of the hardware used to implement yet another embodiment of the present invention;
Figure 12 is a system schematic of the hardware used to implement still another embodiment of the present invention;
Figure 13 is a system schematic of the hardware used to implement a further embodiment of the present invention; and
Figure 14 is a schematic of a signal conditioning block in accordance with the embodiment of Figure 13

### Description of Examples

According to a first aspect there is provided a method of data switching, the method comprising;
receiving data at at least one input port of a crosspoint switch;
the crosspoint switch configurably casting the data to at least one output port of the crosspoint switch;
connecting the or each output port of the crosspoint switch to a respective input of a logic function device;
the logic function device applying a logic function to data received from the or each output port of the crosspoint switch and outputting processed data to one or more respective logic function device output interfaces.

According to a second aspect there is provided a data switch comprising:
a crosspoint switch having at least one input port for receiving data and a plurality of output ports, the crosspoint switch being configured to configurably cast data received at at least one input port of a crosspoint switch to at least one of the output ports; and
a logic function device having one or more inputs respectively connected to the or each output port of the crosspoint switch, the logic function device being configured with at least one logic function to be applied to data received from the output ports of the crosspoint switch and which outputs processed data to respective logic function device output interfaces.

According to a third aspect there is provided a non-transitory computer readable medium for configuration of a data switch, comprising instructions which, when executed by one or more processors, causes performance of the following:
receiving data at at least one input port of a crosspoint switch;
the crosspoint switch configurably casting the data to at least one output port of the crosspoint switch;
connecting the or each output port of the crosspoint switch to a respective input of a logic function device;
the logic function device applying a logic function to data received from the or each output port of the crosspoint switch and outputting processed data to one or more respective logic function device output interfaces.

According to a fourth aspect there is provided a computer program product comprising computer program code means to make a computer execute a procedure for a software controller of a data switch, the computer program product comprising:
computer program code means for selecting one of a plurality of logic function device functions in relation to which data is to be processed;
computer program code means for controlling a crosspoint switch to configurably cast data received at at least one input port of a crosspoint switch to at least one output port of the crosspoint switch, the or each output port of the crosspoint switch being connected to a respective input of a logic function device; and computer program code means for controlling the logic function device to apply the selected logic function to data received from the or each output port of the crosspoint switch and to output processed date to one or more respective logic function device output interfaces.

In some implementations, the crosspoint switch configurably casting the data to at least one output port of the crosspoint switch may comprise the crosspoint switch multicasting the data to a plurality of output ports of the crosspoint switch. In some embodiments, the crosspoint switch configurably casting the data to at least one output port of the crosspoint switch may comprise the crosspoint switch unicasting the data to one output port of the crosspoint switch.

The logic function device may comprise a field programmable gate array (FPGA), a suitably configured application-specific integrated circuit (ASIC) such as a suitably configured x86 CPU based processor or a multicore microprocessor having an inbuilt network interface, or a plurality of such devices. Discussion herein of implementations utilising an FPGA are to be understood as also being applicable to an ASIC or a suitably configured processor within the scope of the aspects.

Some implementations may thus effectively involve optimising for improved low latency and/or improved determinism (fewer MAC collisions), through the abandonment of optimising bandwidth usage. By using the broadcast functionality of a crosspoint switch to distribute data to more than one receiver, the aggregate bandwidth possible is reduced and individual hardware elements' data throughput is not necessarily maximised, however the present aspects recognise that the parallel processing of those multiple identical data streams has other beneficial effects. The aspects thus recognises that many existing switches are designed in order to optimise bandwidth and flexibility of use amongst many use cases, but that this is at the expense of latency and determinism.

The data may be downstream data originating from one or more servers and intended for one or more client devices. Additionally or alternatively, the data may be upstream data originating from one or more client devices and intended for one or more servers. Additionally or alternatively, the data may be peer to peer data such as data being switched between nodes of a high performance computing cluster, or between nodes of a data centre network.

The connection of the output ports of the crosspoint switch to the input ports of the FPGA may in some implementations comprise a direct connection, or in other implementations may be via interposed circuit elements such as AC coupling capacitors, or ICs which perform level translation, buffering, amplification, or signal recovery.

The or each FPGA output interface may comprise one or more of an output port, a Peripheral Component Interconnect Express (PCIe) output, other output interface, or a group of streams of a high speed communications interface.

In some implementations, the data may be downstream data received from a remote location such as a server and intended for distribution to one or more client devices local to the crosspoint switch. Devices are considered local to the switch if connected to the switch and interfacing with a broader network via the switch, even if not in the same physical locality as the switch. In such embodiments the logic function applied by the FPGA may comprise content-based filtering, such as address filtering, whereby the crosspoint switch multicasts the data to a plurality of output ports of the crosspoint switch, and a plurality of client devices are respectively associated with the plurality of FPGA output ports, and whereby the FPGA filters data from each output port of the crosspoint switch in a manner that only data addressed to a particular local client device is output from the respective FPGA output port. Such implementations thus utilise the crosspoint switch for efficient broadcasting, and utilise the FPGA for efficient addressing and other functions. The content-based filtering could involve addressing by reference to the destination or source address from L2, L3 or L4, but could also include protocol based filtering, state-based filtering and deep packet inspection in the case of a firewall, intrusion detection, or extrusion detection system, filtering by invalidation of packets which are to be filtered, or any other logic function which is implemented in the FPGA. Using the crosspoint switch to copy the data stream to more than one function block in the FPGA allows multiple functions to be performed on the same data simultaneously within the FPGA. In such implementations, a single transceiver of the FPGA may serve as both the receive and transmit for each filter. Alternatively, the FPGA may pass data to output ports without address filtering, in implementations in which another device such as the client device connected to the FPGA output port is instead configured for such address filtering. Such implementations thus employ a 'broadcast and filter' approach to addressing each data packet, in contrast to bandwidth optimised layer 2 lookup approaches.

In other implementations, the data may be upstream data received from one or more client devices local to the crosspoint switch and intended for delivery to one or more remote locations such as one or more servers. In such implementations, the logic function provided by the FPGA may be multiplexing. Multiplexing may be provided by the FPGA by each receiver input of the FPGA being connected to a respective FIFO buffer or memory queue for synchronising the respective data clocks, and passing the output of each FIFO or memory queue to a multiplexer to multiplex data from more than one client device into a single upstream data stream. The upstream data stream may then be output by a transmitter at a port of the FPGA, and passed to the crosspoint switch for delivery to an external network front panel port, or more generally to a client device which might include a network interface card internal to the switch, for example. In some implementations the FPGA logic may be configured to implement a firewall, a layer 3 or 4 function such as IP addressing, or packet conversion, potentially performed in parallel. Some implementations may further provide for data delivery from local devices to a plurality of remote locations by:
the crosspoint switch multicasting upstream data from local devices to a plurality of multiplexers in the FPGA;
filtering an output of each multiplexer with an addressing filter so that data is only relayed from the respective multiplexer to a respective external network port when addressed for that port.

In some implementations the crosspoint switch may handle both upstream and downstream data, whereby one of the streams of data is directed by the crosspoint switch to the FPGA whereas the other stream of data is connected directly between crosspoint switch front ports to one or more client devices.

The FPGA may be configured to implement layer 3 (network layer) routing by providing every transceiver with a dedicated routing table. While being hardware inefficient such implementations present considerable latency advantages as compared to layer 3 routers using a single routing table used for all routing.

Implementations may provide a separate FPGA, or separate FPGA logic, for each of the upstream and downstream data functions. Such implementations allow the upstream and/or downstream logic to be physically smaller in the FPGA, permitting fewer pipeline stages to be employed in the FPGA logic and providing reduced latency and routing delays. Ensuring that the logic for the upstream and downstream data components do not share hardware such as transceivers is advantageous in easing routing congestion. Similar considerations apply to peer-to-peer configurations such as use of the data switch for load levelling between processor cores in high performance computing applications.

The aspects recognise that providing an FPGA provides large resources of logic gates and RAM blocks to implement either simple or complex digital computations, with very fast I/Os and data buses. Because the FPGA's logic function is reconfigurable, each port output can potentially have a different logic function implemented, i.e. a simple filter, a multiplex of a number of input streams, a multiplex-and-filter, or a more traditional layer 2 switch function based on a ternary content addressable memory (TCAM). Moreover, such functions can be updated when required and in a programmable and very timely manner which can be critical for applications with time sensitive reconfiguration requirements such as when handling market trading data. Some implementations may thus further provide a management computer operable to reprogram logic blocks of the FPGA using the applicable hardware description language or the like, thus permitting rapid remote reconfiguration such as the adjustment of a filter function or hard-coded routing rules within microseconds. The management computer may for example comprise a 64 bit x86 processor, preferably remotely accessible such as via the Internet. The management computer may deliver instructions to the FPGA via a high speed serial computer expansion bus such as PCI express (PCIe), or via a network link. The filters or other logic functions could in some embodiments be internally automatically configured by actions of the or a FPGA. For example configuration information might be passed, in a low-bandwidth way, between multiplexers, filters or logic function blocks of the FPGA, such as for the purpose of emulating the MAC address learning function in a conventional switch.

In some implementations, the FPGA may be configured with a plurality of functions, with the desired function being adaptively selected by the crosspoint switch switching data to the FPGA port associated with the desired function.

Data from the crosspoint may be directed to any suitable logic function provided by the FPGA, including for example simple logic gates such as AND or XOR in simpler communications protocols in which the FPGA can operate at layer 1, or more complex combinatorial functions such as filtering and/or multiplexing. The logic functions may use the contents of some packet fields as inputs and then modify the contents of other packet fields, as appropriate, using sequential and combinatorial logic. Filtering may in some embodiments be based on any one or more of a field or combination of fields, may utilise a filter compiled dynamically from an expression or program, may involve state based inspection by deep packet inspection, or may comprise a financial market data risk checking gateway. The logic function may involve a transformation, such as Layer 3 routing (e.g, in Ethernet/IP transform a MAC address based on IP address information), Layer 4 routing (e.g. in IP/UDP or IP/TCP transform an IP address based on UDP or TCP port information, implementing NAT), a financial market data ticker plant or parser, or an application protocol translator. The logic function may effect an arbiter, such as to feed data from many sources and discard duplicates (e.g. for combining lossy but high performance communications links with reliable but slow links). In some implementations, the FPGA may be configured to effect time stamping of data in the data stream, thus providing a layer 2 function in the same device as layer 1 functions. To effect timestamping the FPGA can detect the start of packets on its input data interfaces and generate a timestamp which can be added to the packet as metadata, stored for later processing, sent to another device for analysis and/or added to the packet in place of the frame check sequence (FCS) or the interframe gap (IFG). A further function provided by the FPGA may be data packet capture, whereby the crosspoint delivers a duplicate data stream directly or indirectly to a data packet capture RAM, disk and/or PCIe link.

The FPGA may in some implementations further be provided with an external high speed serial bus connection to an external connector, to enable connection of the FPGA to larger-scale functions such as large data memories, or large computing capacity.

The FPGA may further be provided with logic configured to serve as a pulse-per-second monitor, detecting the leading edge of received data symbols, in order to allow internal clocks (generally used for timestamping) to be synchronized to an external time source (such as a GPS) which generates a pulse at some defined time (usually at the start of a second).

Data ports of the crosspoint switch may receive data from any suitable cable including for example copper cables using 10GBASE-T interface type or 1000BASE-T interface type, 100BASE-TX copper, optic fibres using 10GBASE-R/1000BASE-X, direct-attach copper. The crosspoint switch may receive data from any suitable pluggable module, such as SFP, SFP+, QSFP, QSFP+, CFP. Those modules might allow a connection via direct-attach copper, IGBase-SX, 10GBase-SR, 10GBase-LR, DWDM, or other connectivity standards. Alternatively the crosspoint switch might be connected directly to another device using a connector or printed circuit board.

The crosspoint switch may be provided as an ASIC physically separate to the FPGA.

Transceivers of the FPGA may in some implementations be connected directly to front panel ports of a device containing the FPGA and crosspoint switch. Alternatively, transceivers of the FPGA may be connected to the crosspoint switch and isolated from the front panel ports.

In some implementations of the third or fourth aspects, the computer code or instructions may reside on a server available for purchase by switch owners or administrators, in order to configure their hardware with new functions facilitated by the computer code or instructions The computer code or instructions may comprise source code, FPGA hardware description language (HDL), or instructions in a higher level language which may be compiled into HDL, for example.

According to a fifth aspect there is provided a method of physical layer data switching, the method comprising;
receiving data at at least one input port of a switch;
circuit switching the data to at least one output port of the switch, and
copying the data to a higher layer process.

According to a sixth aspect there is provided a physical layer data switch, the switch comprising:
a plurality of data inputs which can each be configurably circuit switched to one or more of a plurality of data outputs, a first data output receiving data which has been circuit switched from a first input, and a second data output receiving a copy of the data from the first input; and
higher layer function circuitry connected to the second data output.

According to a seventh aspect there is provided a non-transitory computer readable medium for configuration of a data switch, comprising instructions which, when executed by one or more processors, causes performance of the following:
circuit switching of data received at at least one input port of a switch to at least one output port of the switch; and
copying of the data to a higher layer process.

According to an eighth aspect there is provided a method of physical layer data switching, the method comprising;
receiving data at at least one input port of a switch;
circuit switching the data to at least one output port of the switch; and
a higher layer process modifying or supplementing the data and producing a second data output at a second output port of the switch.

The fifth to eighth aspects thus recognise that physical layer processing results in low latency and flexibility of protocols, but that physical layer switches do not provide useful counters and statistics which can only be extracted at higher layers, and that physical layer switches thus present a disadvantage to network administrators because for example it is not possible to use such a switch to monitor a data link and diagnose problems.

In contrast to prior physical layer switches, implementations of the fifth to eighth aspects instead provide a physical layer switch that retains the benefits of low latency and protocol flexibility, while also providing higher layer functionality, all without adding any latency overhead to data throughput. In particular, by circuit switching data direct from an input to an output the physical layer switch operates at a low latency level. Moreover, by copying the same data to a higher layer process, higher level monitoring functions can be implemented without affecting the latency of the physical layer switching because such functions are performed in parallel with the switching, For example in some implementations of the fifth to eighth aspects the higher layer process may comprise identifying IP packets and Ethernet frames, which are common protocols used on networks. Other protocols may include Fibre Channel, InfiniBand^{™} and SDI. This parallelism means that even though the higher level monitoring counters and statistics take additional time to process, this does not delay the data as it passes through the switch, In some implementations of the fifth to eighth aspects, the outputs of the higher layer process(es) such as counters and statistics are accessed via a management interface of the switch and do not impede the low latency of the data path.

Reference herein to a higher layer process is to be understood as referring to a process which is not carried out at the physical layer. In some implementations of the fifth to eighth aspects the higher layer process may comprise conversion of physical layer data for higher level processing, including detecting physical layer idle patterns and physical layer errors, for example 8B/10B code violations.

In some implementations of the fifth to eighth aspects, data received at a plurality of data inputs, and preferably all data inputs, is copied to one or more respective higher layer process. Such implementations may thus effect layer 1 switching of each or all of the data inputs while simultaneously providing a higher layer process or processes such as packet identification for each interface, without impacting latency.

In some implementations of the fifth to eighth aspects, the higher layer function may comprise a counter of data packet statistics for the respective interface.

In some implementations of the fifth to eighth aspects, the higher layer function may additionally or alternatively comprise a counter of a number of octets received and transmitted.

In some implementations of the fifth to eighth aspects, the higher layer function may additionally or alternatively comprise a counter of a number of packets, by type (unicast, multicast and broadcast).

In some implementations of the fifth to eighth aspects, the higher layer function may additionally or alternatively comprise a counter of a number of packets, by protocol (Ethernet, IP, UDP, TCP, HTTP, SSH, SNMP, ARP, etc).

In some implementations of the fifth to eighth aspects, the higher layer function may additionally or alternatively comprise a counter of the number of packets, by size. For example a count of the number of 64 byte, 65-127 byte, 256-511 byte, etc, data packets;

In some implementations of the fifth to eighth aspects, the higher layer function may additionally or alternatively comprise a counter of the number of packet errors due to invalid frame check sequence (FCS), packet 'runts', packet "giants' and/or alignment errors or the like;

In some implementations of the fifth to eighth aspects, the higher layer function may additionally or alternatively comprise a counter of the number of dropped frames.

In some implementations of the fifth to eighth aspects, the higher layer function may additionally or alternatively comprise VLAN and/or MACsec counters.

In some implementations of the fifth to eighth aspects, the higher layer function may additionally or alternatively comprise detecting a link idle state.

In some implementations of the fifth to eighth aspects, the higher layer function may additionally or alternatively comprise the ability to inject an idle pattern, or cause an idle pattern to be transmitted onto the wire.

In some implementations of the fifth to eighth aspects, the higher layer function may additionally or alternatively comprise a counter for physical layer errors, for example 8B/10B code errors from which it is possible to calculate an estimate for the physical layer bit error rate.

In some implementations of the fifth to eighth aspects, the higher layer function may additionally or alternatively comprise packet inspection to provide heuristics on the switching device, for example identifying the hosts and/or devices present at the other end of a or each connection by inspecting packet MAC addresses.

In some implementations of the fifth to eighth aspects, the higher layer function may be applied in respect of data captured on either or both of the receive and transmit interfaces.

The higher layer process output, such as a statistic counter value, in some implementations of the fifth to eighth aspects can be reported by a management module of the switch. In some such embodiments the management module functionality can include a command line, a web interface and/or other mechanisms such as SNMP that allow a separate computer to query or receive published counter values.

In some implementations of the fifth to eighth aspects, the higher layer function may additionally or alternatively comprise the ability to timestamp a packet. Such implementations recognise that timestamping in a switch is useful for measuring network latency, and for accurate records that can be used for post examination, testing/modelling/replaying historical network traffic. In implementations handling Ethernet packets, and noting that such packets do not have a field for accurate timestamping information, the timestamp information may be added to the packet by increasing the size of the packet (prepend or append the timestamp data).

Alternatively, timestamp data may be added to each packet by replacing a part of the packet that is used for other information. Such implementations of the fifth to eighth aspects have the benefit that it is possible to timestamp the packets on a fully saturated link, i.e a link which has no more space on the channel for larger packets. One approach that does not impact the size of a packet is to replace the frame check sequence (FCS) field in the Ethernet frame with a 32-bit timestamp value. This might be done only after the FCS is checked and found to be error-free. If the FCS is found to be in error then a special timestamp value can be used in the affected packet. The special timestamp will be one that never occurs for a valid packet. The 32-bit timestamp might represent the number of nanoseconds from a known reference instant in time that can be interpreted as an absolute unit of time by a separate process that also knows the reference instant. For example, the 32-bit timestamp may represent the least significant 32 bits of the absolute time in nanoseconds. In another implementation the Ethernet frame preamble may be partially replaced with a timestamp value.

Implementations of the fifth to eighth aspects providing time stamping of the copy of the data in the data stream thus provide a layer 2 function in the same device as layer 1 switching. To effect timestamping the device can detect the start of packets on its input data interfaces and generate a timestamp which can be added to the packet as metadata, stored for later processing, sent to another device for analysis and/or added to the packet in place of the frame check sequence (FCS) or the interframe gap (TFG).

In implementations of the fifth to eighth aspects in which the higher layer function comprises timestamping packets, the higher layer device may in some embodiments output a second data stream comprising a delayed timestamped copy of the original data stream. Such implementations thus deliver the data to the output at low latency, while also producing a delayed copy of the same data with added timestamp information which might for example be connected to a logging device/computer for separate analysis by an end user.

In implementations of the fifth to eighth aspects in which the higher layer function comprises timestamping packets, the timestamp value may be obtained by sampling a counter register at the moment the start of packet is detected on the receive interface of the switch. In other implementations timestamping may be performed on the output interface of the switch. The counter register is preferably updated regularly (e.g. every nanosecond) so that it is a precise representation of the current time in nanoseconds. The counter may be synchronised to an external time reference external to the switch via a pulse per second (PPS) signal, precision time protocol (PTP) or the like. Alternatively, the timestamp value may be taken at some fixed time offset after the start of packet, and the actual time that the start of packet was received may then be obtained by subtracting the fixed time offset from the timestamp value. In such implementations this subtraction can be performed either before the timestamp is written to the FCS field or alternatively it can be performed when post-processing the timestamped data stream.

In some implementations of the fifth to eighth aspects, the higher layer function may additionally or alternatively comprise data packet capture, whereby some or all of the duplicate data stream is processed via a media access controller (MAC) and then delivered to a data packet capture RAM, disk and/or PCIe link. In such implementations, the management platform may be requested to capture a packet that is passing through an interface, such that the packet will be transmitting at line rate without delay, while it is concurrently copied and reported to the end user via a software / management port. In some implementations, the higher layer function may capture data without MAC processing. In an implementation, the higher layer function may aggregate the captured data from more than one port.

In some implementations of the fifth to eighth aspects the data may be downstream data originating from one or more servers and intended for one or more client devices. Additionally or alternatively, the data may be upstream data originating from one or more client devices and intended for one or more servers. Additionally or alternatively, the data may be peer to peer data such as data being switched between nodes of a high performance computing cluster, or between nodes of a data centre network.

In some implementations of the fifth to eighth aspects, the higher layer function may additionally or alternatively comprise deep packet inspection in the case of a firewall, intrusion detection, or extrusion detection.

In some implementations of the fifth to eighth aspects, the higher layer function may additionally or alternatively comprise the ability to inject a packet into an interface MAC (media access controller), with the output of the MAC being passed to the physical layer. That is, in such implementations user software may communicate a packet to the switch via a management interface, and the higher layer function may involve injecting the packet into either the receive or transmit MAC for a specified interface. The packet will then be transmitted on the wire from an interface. The packet may alternatively be created by software or hardware (e.g. FPGA) on the device, i.e. originating on the device instead of being communicated over the management interface. Some such implementations may inject a packet or packets in order to subscribe to multicast on behalf of downstream hosts, for example, in accordance with the Internet Group Management Protocol Version 2 (IGMP) the subject of the Internet Society RFC2236, and/or in accordance with a protocol-independent multicast (PIM) routing protocol, and/or in accordance with a border gateway protocol (BGP), or the like. In the case of IGMP, subscribing or unsubscribing to a multicast group may comprise injecting IGMP packets for transmission to a neighbouring multicast router to register in a multicast group to receive multicast packets on behalf of downstream clients connected to the ports of the switch of the present invention, thereby obviating the need to have a downstream host perform this function.

In some implementations of the fifth to eighth aspects, data ports of the switch may receive data from any suitable cable including for example copper cables using 10GBASE-T interface type or 1000BASE-T interface type, 100BASF-TX copper, optic fibres using 10GBASE-R/1000BASE-X, direct-attach copper. The switch may receive data from any suitable pluggable module, such as SFP, SFP+, QSFP, QSFP+, CFP. Those modules might allow a connection via direct-attach copper, 1GBase-SX, 10GBase-SR, 10GBase-LR, DWDM, or other connectivity standards. Alternatively the switch might be connected directly to another device using a connector or printed circuit board.

In some implementations of the fifth to eighth aspects, the higher layer function to which the data is copied may be adaptively selected by switching the copied data stream to one of a plurality of outputs of the switch, each of the plurality of outputs being connected to a respective higher layer function. Such implementations permit dynamic selection of which higher layer function or functions is or are applied to the copied data stream. In such implementations, the output of the higher layer function may be returned to the crosspoint switch to permit dynamic and configurable switching of the output of the higher layer function to any chosen output of the crosspoint.

In some implementations of the fifth to eighth aspects, the higher layer function may be effected by a signal conditioning block positioned at an input and/or output of the crosspoint switch, to which the data is copied.

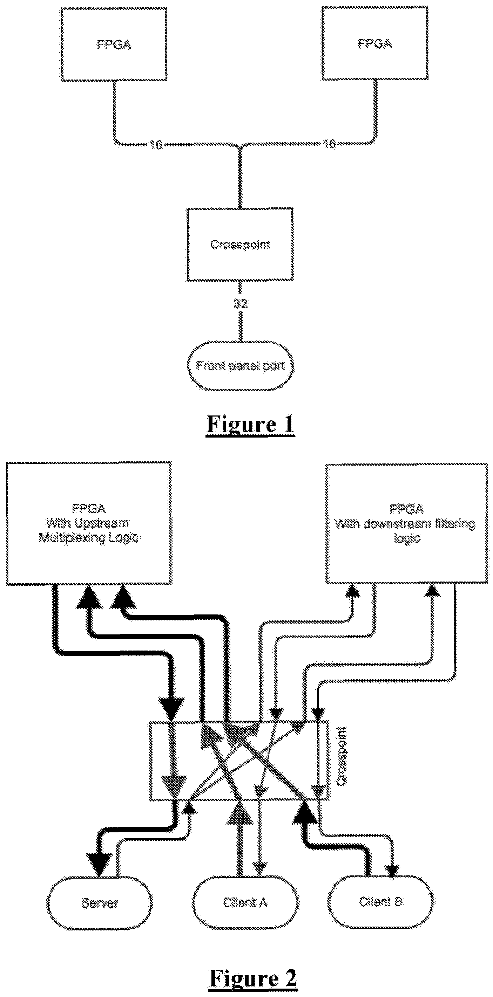

Figure 1 is a system schematic of the hardware used to implement one embodiment of the present invention. It consists of some front panel ports which can be connected to other devices, some FPGAs which have transceivers which can talk to the front panel ports, and a crosspoint switch which can remap, as well as multicast data from one port to multiple ports. It is noted that not all of the cross point outputs will necessarily be connected to the logic functions of the FPGAs as some ports will be needed to provide data output to external devices.

For the upstream component of the device of Figure 1, the device provides an FPGA which takes a number of input streams and multiplexes them into one. This single multiplexed stream is then returned through the crosspoint switch. Since there is very little other logic in the device, there is little congestion, which means the FPGA can be driven at high clock rates, with short pipelines or groupings of logic components in the FPGA. That is, the simplified data pathway allows each element to be highly optimised. This allows for a low latency or other logic.

By combining an FPGA with a crosspoint switch in the manner shown in Figure 1, it becomes possible to effect the broadcast function in the crosspoint switch, and to effect the filter function or other such functions in the FPGA. The advantage is that the broadcast component can be conducted in the crosspoint where it can be done efficiently with low latency, which leaves only the filtering function to the FPGA. i.e. each filter within the FPGA contains an input and an output, This keeps the complex logic and clocking extremely local (potentially within a short distance of the transceiver itself). This in turn will allow for lower latency within the device, It also means that the transceivers for the downstream component (and therefore the filtering logic) can be spread amongst a number of FPGAs, since there is no need to transport data within the FPGA except locally to the transceiver.

It also means that the upstream component can be implemented in adjacent transceivers with no interaction with the downstream logic, potentially allowing for a much more efficient upstream implementation (e.g. less cycles and lower latency). In alternative embodiments within the scope of the invention, interaction between upstream and downstream logic components may sometimes be required such as when implementing flow control or 1000BASE-X auto negotiation.

Upstream and downstream logic can even be implemented in separate FPGAs, as shown in Figure 2. In this configuration it is possible to fit a lot more logic inside the device as a whole. While alternative embodiments may implement both upstream and downstream functions on one FPGA or ASIC, and even in such embodiments the logic for the upstream and downstream components do not need to share hardware resources (in particular, the transceivers) and therefore do not need to reside in the same part of the FPGA, easing routing congestion.

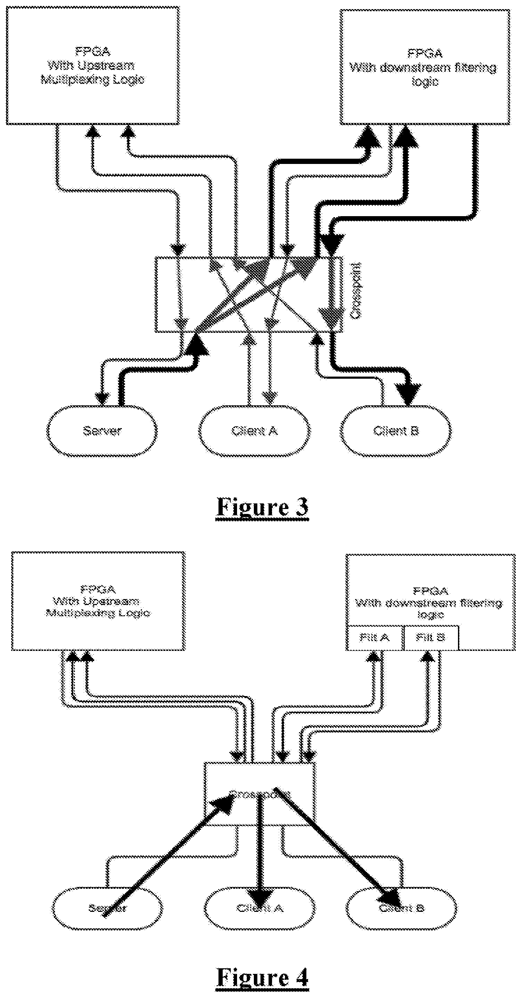

The downstream component is shown in Figure 3. In this component the logic can also be made simple. When the upstream server sends data addressed to one of the nodes, the data is broadcast by the crosspoint switch to more than one filter within the FPGA. Each filter is very small and self-contained and there is no routing of data over long distances across the FPGA between transceivers. Both the receive and transmit for the filter can be implemented in the same transceiver on the FPGA. The filters operate on the data received from the crosspoint, and the data is only transmitted (back via the crosspoint) to the downstream client if the filter passes the data.

If all clients should receive all data, independent of filtering, the crosspoint can broadcast the data directly to the clients without passing data to the FPGA, as shown in Figure 4.

In further embodiments of the invention, multiplex and filter functionality can be combined in order to handle multiple upstream servers, or create a fully cross-connected switch.

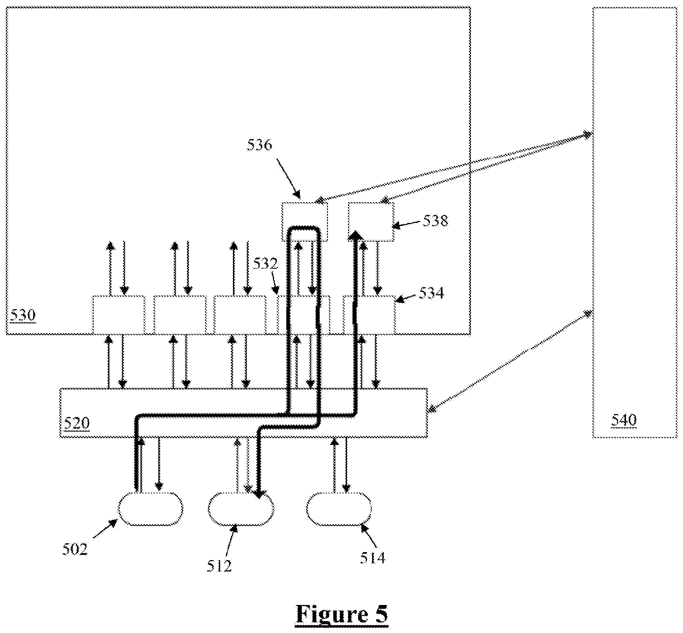

Figure 5 is a data flow diagram of an embodiment of the invention providing reconfigurable downstream data filtering. For the downstream case, data is transmitted from an upstream server 502 to several downstream clients 512, 514, with a data flow as shown. The data is transmitted from the server 502 and received at an external port, where it enters the crosspoint switch 520. The data is multicast by crosspoint 520 to FPGA 530, to one transceiver 532, 534 per filter 536, 538. It is possible to use one filter per downstream client 512, 514 as shown, if all of the ports have different filtering requirements, otherwise it is possible to broadcast from a single filter of FPGA 530 to as many clients or ports as desired, by appropriately configuring the crosspoint switch 520. The embodiment of figure 5 comprises two filters, one per downstream port. Each filter 536, 538 has a transceiver 532, 534 associated with it, and can either run in one clock domain for both receiving and transmitting (i.e. TX is driven by the recovered clock) or, using a FIFO or other clock domain crossing, in multiple clock domains. The former would be preferred for the lowest possible latency, however some embodiments may use the latter for example to fully re-clock the data and provide the best signal quality for transmission. The chosen scheme will depend on the signal quality required. In figure 5 we show the filters implemented in one clock domain.

The data is transmitted by the crosspoint switch 520 to every filter 536, 538, where it is received by a respective transceiver 532, 534. Each transceiver 532, 534 deserialises the data. The filter logic 536, 538 interprets that data and if it matches the required criteria, i.e. if the data is addressed to the client associated with that filter, the filter re-transmits the data using the same transceiver, as shown for filter 536. As a consequence of this arrangement the logic 536, 538can be very close to the respective transceiver 532, 534. If the data does not match the filter criteria, i.e. if the data is not addressed to the client associated with that filter, then the data is not re-transmitted, as shown for filter 538, The crosspoint switch 520 is configured to transport the output of the filters 536, 538 to the appropriate port(s) associated with clients 512, 514 by the management computer 540. The management computer 540 also configures the filters 536, 538 so that they select the data which should be transmitted to the ports associated with clients 512, 514. The filter logic 536, 538 can be very simple or very complex, depending on the filtering criteria required and the level of complexity required.

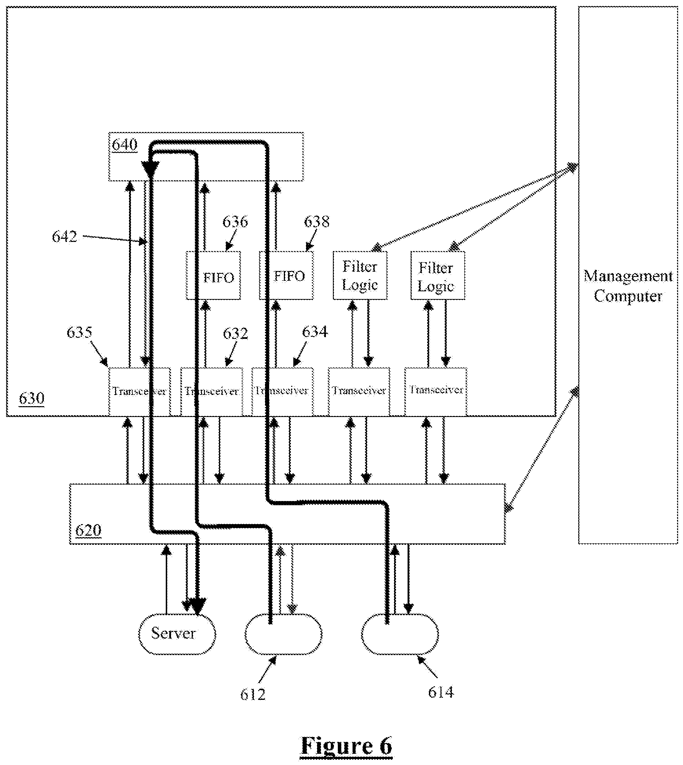

Figure 6, which is not covered by the scope of the claims, is a data flow diagram of an example providing reconfigurable upstream data filtering. In the upstream case, the crosspoint 620 acts to re-direct the data from the ports associated with clients 612, 614 to independent transceivers 632, 634 on the FPGA 630. The transmit function of transceivers 632, 634 is not used, only the receive function is used. The deserialised data from transceivers 632, 634 is received through a respective FIFO 636, 638 which are each used for crossing clock domains. Multiplexing logic 640 is used to receive the data from the FIFOs 636, 638. Packets of data may then be multiplexed into a single output stream indicated at 642. This is sent via another transceiver 635, although in alternative embodiments the transmitter of one of the receive transceivers 632, 634 could be used instead of transceiver 635, saving the use of one transceiver.

Advantageously in Figures 5 and 6, the upstream logic is physically separate from the downstream logic in the FPGA. This allows the logic to be physically smaller in the FPGA, which allows for less pipeline stages and a lower latency.

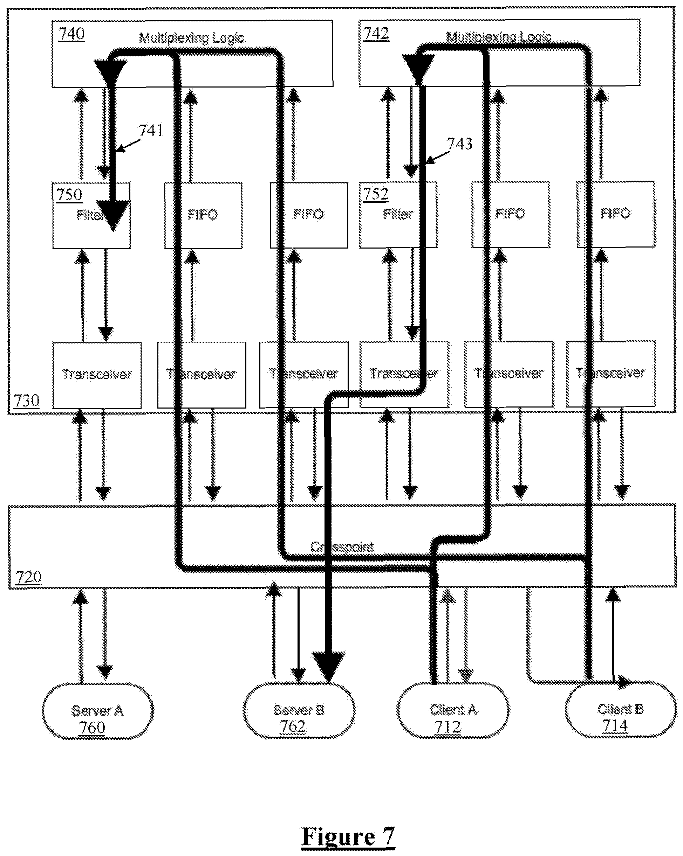

Figure 7 illustrates another embodiment of the present invention, in which more than one multiplexer is utilised in a single FPGA. By broadcasting packets from clients to multiple multiplexers 740, 742, and filtering the output of those multiplexers with separate filters 750, 752, this embodiment can handle multiple upstream servers 760, 762. While shown with two servers it is to be appreciated that other embodiments can in an analogous manner cater for a larger number of servers. This embodiment thus provides the interconnectivity of a fully connected switch while also providing the advantages of the present invention. In figure 7, upstream packets originating from client devices 712, 714 are multicast by crosspoint 720 to two different multiplexing modules 740, 742 implemented in the FPGA 730. Each multiplexing module 740, 742 multiplexes the packets, and then filters 750 and 752 filter the two multiplexed streams to discard those that do not match the respective filter's criteria. In Figure 7 filter 752 is shown passing the respective data stream 743 intended for server B 762, whereas filter 750 is discarding data stream 741 as it is not intended for server A 760. In a variation of the embodiment of Figure 7, bandwidth could be increased by providing four filters to implement the filtering before the multiplexing logic 740, 742, rather than after. Moreover, in some applications it may be acceptable for the multiplexed data to be passed to both servers 760 and 762, if it is anticipated that each server will discard data not addressed to that server. In this case filters 750 and 752 may be omitted which would further reduce latency.

The embodiments of Figures 1 to 7 thus use a crosspoint switch to multicast data to several points in the analogue domain. By creating multiple copies of the same data, each such embodiment is able to spread the logic for different functions within the same device across different FPGAs or ASICs, or across different parts of a single FPGA or ASIC.

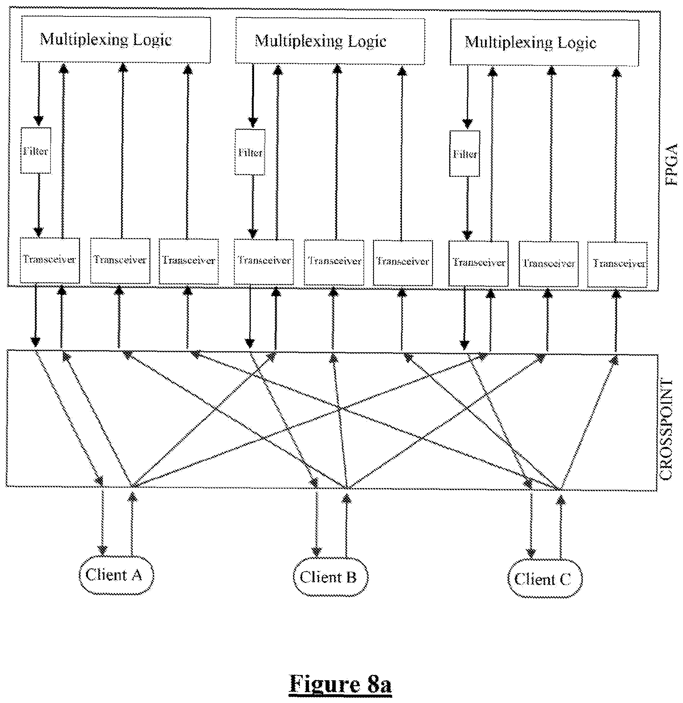

Figure 8a illustrates a fully cross-connected (3 x 3) switch in accordance with another embodiment of the present invention. As shown, an extension of the mux-and-filter logical function is to add more multiplexers and filters into the FPGA. This allows for packets to be sent from each client to more than one host. In this embodiment each client interface is associated with a unique multiplexer, and this enables packets to be transmitted to any other port. A dedicated filter is provided for each port, and is used to limit the packets received by each port to be only those packets which are addressed to that port. This architecture can be used to implement a traditional Ethernet switch: the filters are configured to forward only packets which are addressed to an address which is known to be connected to a network which is connected to the port for which the filter is filtering.

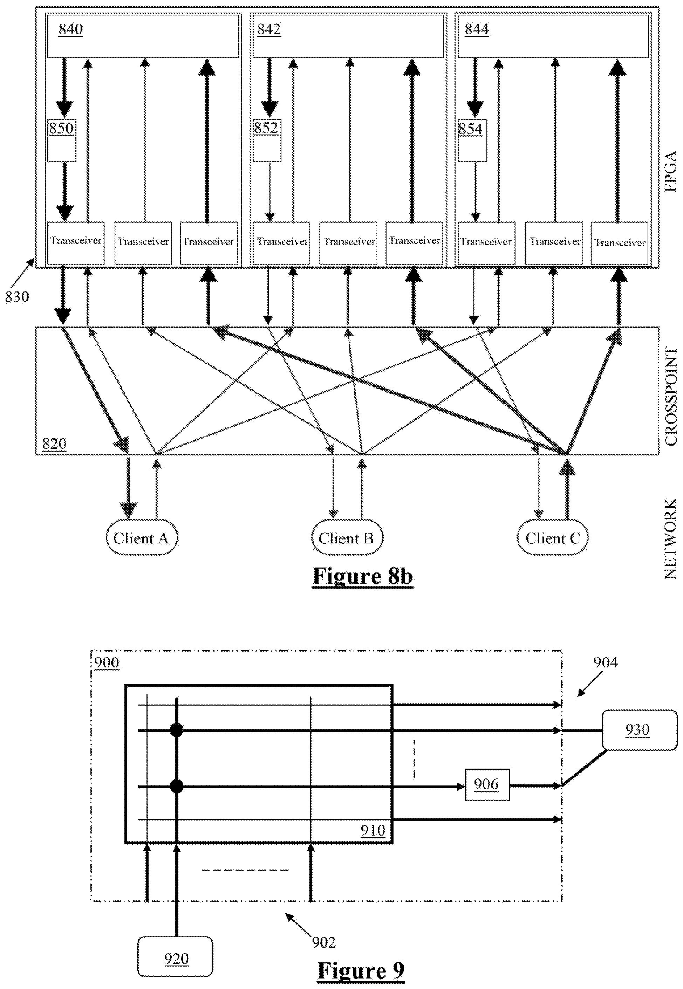

Figure 8b illustrates handling of one packet in the embodiment of Figure 8a. In this example the filters are set up to receive only packets addressed to the associated client, and the packets take the path shown. Client C transmits a packet which has a destination address of "Client A". The crosspoint switch 820 is configured to multicast the packet to three different transceivers on FPGA 830. The packets are received by the transceivers and passed to three independent sets of multiplexing logic 840, 842, 844. Each multiplexing logic function multiplexes received data and then transmits the packet to a respective filter 850, 852, 854. The filter 850 for multiplexing logic 840 transmits the packet to its associated transceiver as the packet is addressed to client A. The filters 852 and 854, for Clients B and C, do not transmit the packet. The transceiver for multiplexing logic 840 transmits the packet to the crosspoint switch 820. The crosspoint switch 820 is configured to unicast received data from filter 850 to Client A, and the packet reaches the correct destination. This utilisation of the resources is not optimised for bandwidth, since N² transceivers and N multiplexers are required to implement an N-port switch. However, such a system can be built with lower latency and better determinism than a system with shared resources.

While the embodiment of Figure 8 illustrates implementation of an N port fully cross connected switch in accordance with the present invention, in alternative embodiments the handling of data need not be the same for each client or each port of the crosspoint switch. For example, the embodiment of Figure 8 could be modified in some embodiments so as to be timestamping data received at one port, while multiplexing data received on other ports.

Figure 9 is a system schematic of the hardware used to implement one embodiment of the present invention. The switch 900 comprises a number of front panel ports indicated generally at 902 which can be connected to other devices, and a crosspoint switch 910 which can remap, as well as multicast data from one port to multiple ports,

In the configuration shown in Figure 9, which can be reconfigured at other times, input data is received from a data source 920 and is circuit switched by crosspoint 910 to a respective data output 904 associated with the intended destination 930. In this sense, switch 900 performs as a physical layer switch. It is noted that outputs 904, while being shown separate to inputs 902, in a typical rack mounted device may be co-located on a front panel of the device with inputs 902. The inputs 902 and outputs 904 may be effected by a plurality of transceivers, each transceiver effecting one data input 902 and one data output 904. Currently active switching paths within crosspoint 910 are indicated in Figure 9 by firmer lines simply for illustrative purposes.

In some implementations, the data received from data source 920 is not only delivered to destination 930, but is also copied by the crosspoint switch 910 to a higher layer process which is performed by device 906 within switch 900.

In this embodiment, device 906 comprises a timestamping function so that a second stream of data is delivered from device 906 to destination 930. Destination 930 thus receives the original data via an extremely low latency path, while also receiving a timestamped copy of the data albeit with greater latency, due to the additional latency introduced by device 906.

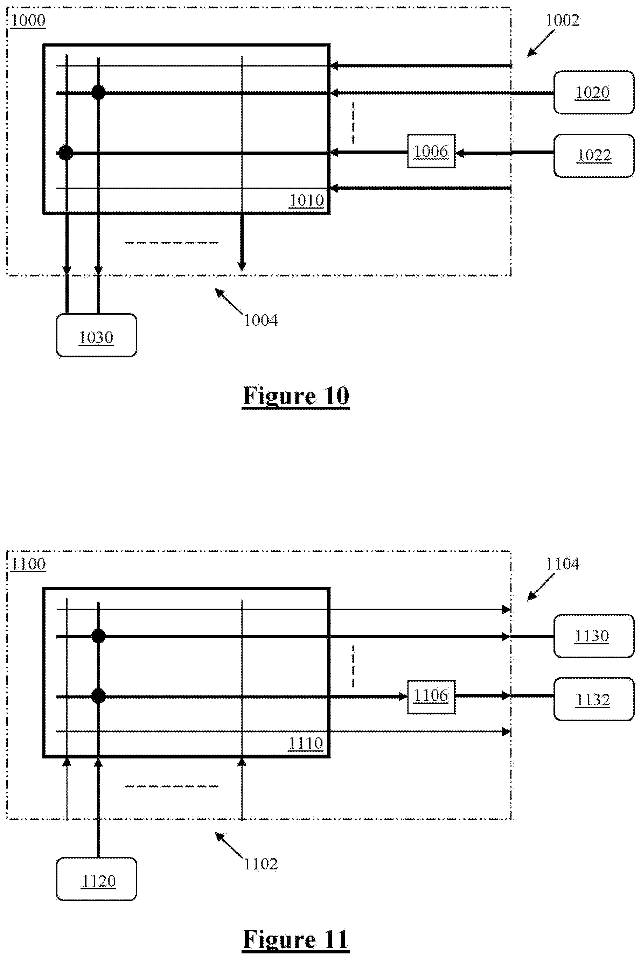

Figure 10 is a system schematic of the hardware used to implement one embodiment of the present invention. The switch 1000 comprises a number of front panel ports indicated generally at 1002 which can be connected to other devices, and a crosspoint switch 1010 which can remap, as well as multicast data from one port to multiple ports.

In the configuration shown in Figure 10, which can be reconfigured at other times, input data is received from a data source 1020 and is circuit switched by crosspoint 1010 to a respective data output 1004 associated with the intended destination 1030. In this sense switch 1000 performs as a physical layer switch. It is noted that outputs 1004, while being shown separate to inputs 1002, in a typical rack mounted device may be co-located on a front panel of the device with inputs 1002. The inputs 1002 and outputs 1004 may be effected by a plurality of transceivers, each transceiver effecting one data input 1002 and one data output 1004. Currently active switching paths within crosspoint 1010 are indicated in Figure 10 by firmer lines simply for illustrative purposes.

In some implementations, the data received from data source 1020 is not only delivered to destination 1030, but a higher layer process which is performed by device 1006 within switch 1000 and produces packets which are also switched to output 1030.

In this embodiment, device 1006 comprises a multicasting subscribing function so that IGMP packets are injected into the data stream sent to a neighbouring router 1030 in order for devices 1020 and/or 1022 to subscribe or unsubscribe to a multicast group. Destination 1030 thus receives data from device 1020 via an extremely low latency path, while also receiving higher layer function data such as IGMP data packets injected into either the transmit MAC for the specified interface, albeit with greater latency, due to the additional latency introduced by device 1006.

Figure 11 is a system schematic of the hardware used to implement yet another embodiment of the present invention. The switch 1100 comprises a number of front panel ports indicated generally at 1102 which can be connected to other devices, and a crosspoint switch 1110 which can remap, as well as multicast data from one port to multiple ports.

In the configuration shown in Figure 11, which can be reconfigured at other times, input data is received from a data source 1120 and is circuit switched by crosspoint 1110 to a respective data output 1104 associated with the intended destination 1130. In this sense switch 1100 performs as a physical layer switch. It is noted that outputs 1104, while being shown separate to inputs 1102, in a typical rack mounted device may be co-located on a front panel of the device with inputs 1102. The inputs 1102 and outputs 1104 may be effected by a plurality of transceivers, each transceiver effecting one data input 1102 and one data output 1104. Currently active switching paths within crosspoint 1110 are indicated in Figure 11 by firmer lines simply for illustrative purposes.

In some implementations, the data received from data source 1120 is not only delivered to destination 1130, but is also copied by the crosspoint switch 1110 to a higher layer process which is performed by device 1106 within switch 1100.

In this embodiment, device 1106 comprises a link controller configured to provide data link statistics to an administrator 1132. In this embodiment device 1106 provides a plurality of higher layer functions including detecting physical layer idle patterns and physical layer errors, counting data packets by type, protocol and size, counting data packet errors by error type including invalid FCS, packet size or alignment, and packet MAC address inspection to identify connected devices.

Destination 1130 thus receives the original data via an extremely low latency path, while device 1132 receives data link statistics albeit with greater latency, due to the additional latency introduced by device 1106.

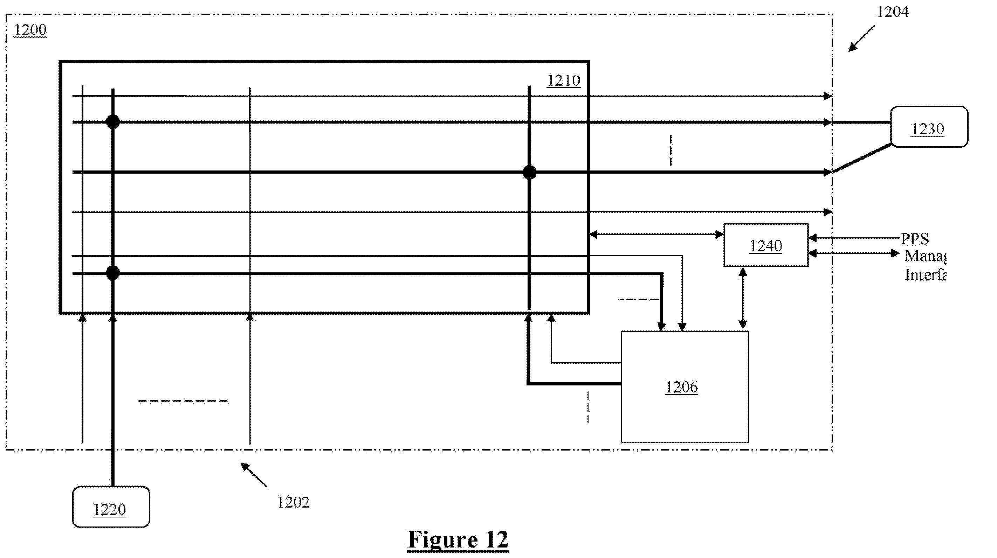

Figure 12 is a system schematic of the hardware used to implement yet another embodiment of the present invention. The switch 1200 comprises a number of front panel ports indicated generally at 1202 which can be connected to other devices, and a crosspoint switch 1210 which can remap, as well as multicast data from one port to multiple ports.

In the configuration shown in Figure 12, which can be reconfigured at other times, input data is received from a data source 1220 and is circuit switched by crosspoint 1210 to a respective data output 1204 associated with the intended destination 1230. In this sense switch 1200 performs as a physical layer switch. It is noted that outputs 1204, while being shown separate to inputs 1202, in a typical rack mounted device may be co-located on a front panel of the device with inputs 1202. The inputs 1202 and outputs 1204 may be effected by a plurality of transceivers, each transceiver effecting one data input 1202 and one data output 1204. Currently active switching paths within crosspoint 1210 are indicated in Figure 12 by firmer lines simply for illustrative purposes.

In some implementations, the data received from data source 1220 is not only delivered to destination 1230, but is also copied by the crosspoint switch 1210 to a higher layer process which is performed by device 1206 within switch 1200. Device 1206 in this embodiment has a plurality of inputs each associated with a selected high layer function, so that a desired function can be selected simply by switching the copied data to the respective input of device 1206. Moreover, the output of device 1206 is returned to crosspoint 1210 and thereby may be selectively switched to any output port 1204, and at the time shown in Figure 12 the device 1200 is configured to switch the output of higher layer device 1206 to destination 1230, although at other times the output may be switched to other destinations. A management system processor 1240 receives a pulse per second (PPS) input to enable timestamping and also communicates via a management interface to permit external management. Management system 1240 further controls and communicates with crosspoint 1210 and with higher layer device 1206,

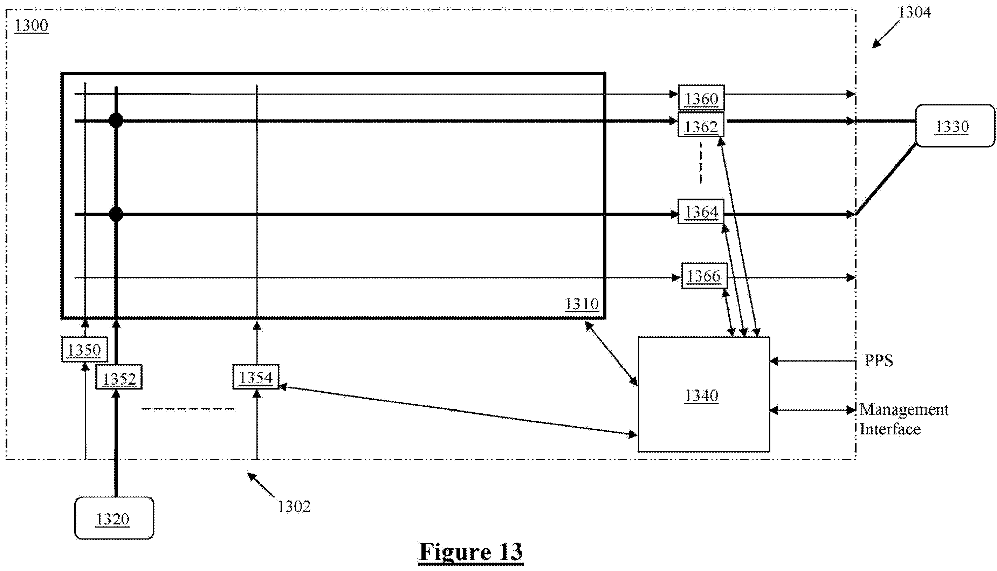

Figure 13 is a system schematic of the hardware used to implement yet another embodiment of the present invention. The switch 1300 comprises a number of front panel ports indicated generally at 1302 which can be connected to other devices, and a crosspoint switch 1310 which can remap, as well as multicast data from one port to multiple ports.

In the configuration shown in Figure 13, which can be reconfigured at other times, input data is received from a data source 1320 and is circuit switched by crosspoint 1310 to a respective data output 1304 associated with the intended destination 1330. In this sense switch 1300 performs as a physical layer switch. It is noted that outputs 1304, while being shown separate to inputs 1302, in a typical rack mounted device may be co-located on a front panel of the device with inputs 1302. The inputs 1302 and outputs 1304 may be effected by a plurality of transceivers, each transceiver effecting one data input 1302 and one data output 1304. Currently active switching paths within crosspoint 1310 are indicated in Figure 13 by firmer lines simply for illustrative purposes.

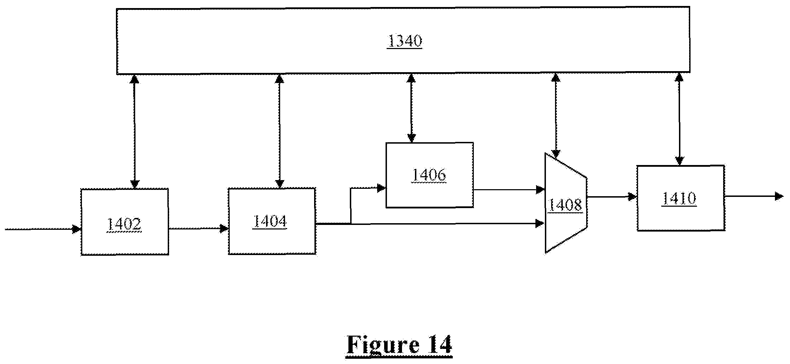

In some implementations, the data received from data source 1320 is not only delivered to destination 1330, but is also copied by the crosspoint switch 1310 to a higher layer process which is performed by device 1364 within switch 1300. Device 1364 in this embodiment is a signal conditioning block of the type shown in Figure 14. The output of higher layer device 1364 is passed to destination 1330, although at other times the output may be switched to other destinations. A management system processor 1340 receives a pulse per second (PPS) input to enable timestamping and also communicates via a management interface to permit external management. Management system 1340 further controls and communicates with crosspoint 1310 and controls all of the signal conditioning blocks 1350, 1354 and 1360... 1366.

In the signal conditioning block 1364 shown in Figure 14 , input data is passed through a EQ block 1402 which is configurable via the management interface 1340 as indicated by double-ended arrows throughout Figure 14 . EQ block 1402 is an equaliser that performs filtering on the received signal to compensate for the effects of passing through the communications channel (cable), thus reducing the likelihood of errors. EQ block 1402 can adjust the frequency components of the signal and may also remove multi-path distortion, the output of which is much closer to the ideal representation of the data than the unequalised received signal. From EQ 1402 data is passed to clock data recovery (CDR) block 1404 which is configurable via the management interface 1340. From CDR 1404 data is passed both to a higher layer function 1406 and to a multiplexer 1408, both controlled by management system processor 1340. The output of the higher layer function block 1406 is also passed to multiplexer 1408. From multiplexer 1408, multiplexed low latency data and higher layer function output data are passed to a pre-emphasis block 1410, which modifies the frequency components of the transmitter signal to compensate, in advance, for the expected effects of the communication channel (cable), resulting in the destination receiving a signal which is closer to an ideal representation of the data thus reducing the likelihood of errors. From pre-emphasis block 1410 multiplexed low latency data and higher layer function output data are output by signal conditioning block 1364. Any or all of signal conditioning blocks 1350... 1354 and 1360... 1366 in the embodiment of Figure 13 may be configured as shown in Figure 14.

In embodiments which are applied in relation to multi-lane standards like 40G, these can be treated in a similar way, for example filtering for 40G can happen in a group of four transceivers, and broadcast can happen for all four lanes in one or more crosspoint devices.

## Claims

1. A method of data switching, the method comprising:
receiving, at a crosspoint switch (520; 820), data;
multicasting, by the crosspoint switch, the data from the crosspoint switch to a first function block in a logic function device and to a second function block in the logic function device, wherein the first function block comprises a first filter, and the second function block comprises a second filter, wherein multicasting the data comprises sending a first copy of the data to the first function block and a second copy of the data to the second function block;
filtering the first copy of the data in the first filter (536; 852) of the logic function device, the first filter having a first criterion of whether the first copy of the data is addressed to a first client;
if the first copy of the data is addressed to the first client, transmitting the first copy of the data from the first function block to the first client (512) via the crosspoint switch;
if the first copy of the data is not addressed to the first client, not transmitting the first copy of the data from the first function block to the first client;
filtering the second copy of the data in the second filter (538; 854) of the logic function device, the second filter having a second criterion of whether the second copy of the data is addressed to a second client;
if the second copy of the data is addressed to the second client, transmitting the second copy of the data from the second function block to the second client (514) via the crosspoint switch; and
if the second copy of the data is not addressed to the second client, not transmitting the second copy of the data from the second function block to the second client.

2. The method of claim 1, further comprising:
receiving, at the crosspoint switch (520; 820), second data from the first client (512) and third data from the second client(514);
transmitting, by the crosspoint switch, the second data from the crosspoint switch to a third function block (840);
transmitting, by the crosspoint switch, the third data from the crosspoint switch to the third function block,
multiplexing, by the third function block, the second data and the third data into a single data stream; and
transmitting, after multiplexing by the third function block, the multiplexed data stream via the crosspoint switch.

3. The method of claim 1, further comprising:
receiving, at the crosspoint switch (520; 720; 820), second data from the first client (512; 712) and third data from the second client (514; 714);
transmitting, by the crosspoint switch, the second data from the crosspoint switch to a third function block (740; 840);
transmitting, by the crosspoint switch, the third data from the crosspoint switch to the third function block;
multiplexing, by the third function block, the second data and the third data into a first single data stream;
transmitting, by the crosspoint switch, the second data from the crosspoint switch to a fourth function block (742);
transmitting, by the crosspoint switch, the third data from the crosspoint switch to the fourth function block; and
multiplexing, by the fourth function block, the second data and the third data into a second single data stream.

4. The method of claim 3, further comprising:
filtering first single data stream in a third filter (750; 850), the third filter having a third criterion;
filtering the second single data stream in a fourth filter (752), the fourth filter having a fourth criterion;
if the first single data stream matches the third criterion, transmitting the first single data stream from the third function block (740; 840) via the crosspoint switch (520; 720; 820); and
if the second single data stream matches the fourth criterion, transmitting the second single data stream from the fourth function block (742) via the crosspoint switch.

5. The method of claims 3 or 4, wherein the first function block and the second function block are located on a first field programmable gate array, FPGA, and wherein the third function block (740; 840) and the fourth function block (742) are located on a second FPGA separate from the first FPGA.

6. The method of any of claims 1-4, wherein the logic function device (830) has first and second ports, wherein the first filter is dedicated to the first port, and wherein the second filter is dedicated to the second port.

7. The method of any of claims 1-6, wherein the first and second filters are each configured to operate in one clock domain for transmission and for reception.

8. The method of any of claims 1-6, wherein the first and second filters are each configured to operate in multiple clock domains.

9. The method of any of claims 1-8, wherein the first copy of the data is sent to the first function block via a first transceiver and wherein the second copy of the data is sent to the second function block via a second transceiver.

10. A system comprising a crosspoint switch (520; 820) and a logic function device (530; 830) comprising a first function block and a second function block , wherein
the crosspoint switch is configured to:
receive data; and
multicast the data to the first function block and to the second function block by sending a first copy of the data to the first function block and a second copy of the data to the second function block;
the first function block comprises a first filter (536; 852) having a first criterion of whether the first copy of the data is addressed to a first client, the first filter being configured to filter the first copy of the data;
the second function block comprises a second filter (538; 854) having a second criterion of whether the second copy of the data is addressed to a second client, the second filter being configured to filter the second copy of the data;
the first function block is configured to:
if the first copy of the data is addressed to the first client, transmit the first copy of the data to the first client (512) via the crosspoint switch; and
if the first copy of the data is not addressed to the first client, not transmit the first copy of the data from the first function block to the first client; and
the second function block is configured to:
if the second copy of the data is addressed to the second client, transmit the second copy of the data to the second client (514) via the crosspoint switch; and
if the second copy of the data is not addressed to the second client, not transmit the second copy of the data from the second function block to the second client.

11. The system of claim 10, wherein
the crosspoint switch (820) is configured to:
receive second data from the first client and third data from the second client;
transmit the second data to a third function block (840); and
transmit the third data to the third function block; and
the third function block is configured to:
multiplex the second data and the third data into a single data stream; and
transmit the multiplexed data stream via the crosspoint switch.

12. The system of claim 11, wherein
the first function block and the second function block are located on a first field programmable gate array, FPGA; and
the third function block (840) is located on a second FPGA separate from the first FPGA.

13. The system of claim 10, wherein
the crosspoint switch (820) is configured to
receive second data from the first client and third data from the second client;
transmit the second data and the third data to a third function block (840); and
transmit the second data and the third data to a fourth function block;
the third function block is configured to multiplex the second data and the third data into a first single data stream; and
the fourth function block is configured to multiplex the second data and the third data into a second single data stream.

14. The system of claim 13, wherein
the third function block comprises a third filter (850) having a third criterion, the third filter being configured to filter the first single data stream;
the fourth function block comprises a fourth filter having a fourth criterion, the fourth filter being configured to filter the second single data stream;
the third function block is configured to, if the first single data stream matches the third criterion, transmit the first single data stream via the crosspoint switch; and
the fourth function block is configured to, if the second single data stream matches the fourth criterion, transmit the second single data stream via the crosspoint switch.

15. The system of claims 13 or 14, wherein
the first function block and the second function block are located on a first field programmable gate array, FPGA; and
the third function block and the fourth function block are located on a second FPGA separate from the first FPGA.

## Patentansprüche

1. Verfahren zum Datenschalten, wobei das Verfahren Folgendes umfasst:
Empfangen von Daten an einem Kreuzpunktschalter (520; 820);
Multicasten der Daten durch den Kreuzpunktschalter von dem Kreuzpunktschalter zu einem ersten Funktionsblock in einer Logikfunktionsvorrichtung und zu einem zweiten Funktionsblock in der Logikfunktionsvorrichtung, wobei der erste Funktionsblock einen ersten Filter umfasst und der zweite Funktionsblock einen zweiten Filter umfasst, wobei das Multicasten der Daten das Senden einer ersten Kopie der Daten zu dem ersten Funktionsblock und einer zweiten Kopie der Daten zu dem zweiten Funktionsblock umfasst;
Filtern der ersten Kopie der Daten in dem ersten Filter (536; 852) der Logikfunktionsvorrichtung, wobei der erste Filter ein erstes Kriterium dafür aufweist, ob die erste Kopie der Daten an einen ersten Client adressiert ist;
wenn die erste Kopie der Daten an den ersten Client adressiert ist, Übertragen der ersten Kopie der Daten von dem ersten Funktionsblock zu dem ersten Client (512) über den Kreuzpunktschalter;
wenn die erste Kopie der Daten nicht an den ersten Client adressiert ist, Nichtübertragen der ersten Kopie der Daten von dem ersten Funktionsblock zu dem ersten Client;
Filtern der zweiten Kopie der Daten in dem zweiten Filter (538; 854) der Logikfunktionsvorrichtung, wobei der zweite Filter ein zweites Kriterium dafür aufweist, ob die zweite Kopie der Daten an einen zweiten Client adressiert ist;
wenn die zweite Kopie der Daten an den zweiten Client adressiert ist, Übertragen der zweiten Kopie der Daten von dem zweiten Funktionsblock zu dem zweiten Client (514) über den Kreuzpunktschalter; und
wenn die zweite Kopie der Daten nicht an den zweiten Client adressiert ist, Nichtübertragen der zweiten Kopie der Daten von dem zweiten Funktionsblock zu dem zweiten Client.

2. Verfahren nach Anspruch 1, weiter umfassend:
Empfangen, an dem Kreuzpunktschalter (520; 820), zweiter Daten von dem ersten Client (512) und dritter Daten von dem zweiten Client (514) **;**
Übertragen, durch den Kreuzpunktschalter, der zweiten Daten von dem Kreuzpunktschalter zu einem dritten Funktionsblock (840);
Übertragen, durch den Kreuzpunktschalter, der dritten Daten von dem Kreuzpunktschalter zu dem dritten Funktionsblock,
Multiplexen, durch den dritten Funktionsblock, der zweiten Daten und der dritten Daten zu einem einzelnen Datenstrom; und
Übertragen, nach dem Multiplexen durch den dritten Funktionsblock, des gemultiplexten Datenstroms über den Kreuzpunktschalter.

3. Verfahren nach Anspruch 1, weiter umfassend:
Empfangen, an dem Kreuzpunktschalter (520; 720; 820), zweiter Daten von dem ersten Client (512; 712) und dritter Daten von dem zweiten Client (514; 714);
Übertragen, durch den Kreuzpunktschalter, der zweiten Daten von dem Kreuzpunktschalter zu einem dritten Funktionsblock (740; 840);
Übertragen, durch den Kreuzpunktschalter, der dritten Daten von dem Kreuzpunktschalter zu dem dritten Funktionsblock;
Multiplexen, durch den dritten Funktionsblock, der zweiten Daten und der dritten Daten zu einem ersten einzelnen Datenstrom;
Übertragen, durch den Kreuzpunktschalter, der zweiten Daten von dem Kreuzpunktschalter zu einem vierten Funktionsblock (742);
Übertragen, durch den Kreuzpunktschalter, der dritten Daten von dem Kreuzpunktschalter zu dem vierten Funktionsblock; und
Multiplexen, durch den vierten Funktionsblock, der zweiten Daten und der dritten Daten zu einem zweiten einzelnen Datenstrom.

4. Verfahren nach Anspruch 3, weiter umfassend:
Filtern des ersten einzelnen Datenstroms in einem dritten Filter (750; 850), wobei der dritte Filter ein drittes Kriterium aufweist;
Filtern des zweiten einzelnen Datenstroms in einem vierten Filter (752), wobei der vierte Filter ein viertes Kriterium aufweist;
wenn der erste einzelne Datenstrom mit dem dritten Kriterium übereinstimmt, Übertragen des ersten einzelnen Datenstroms von dem dritten Funktionsblock (740; 840) über den Kreuzpunktschalter (520; 720; 820); und
wenn der zweite einzelne Datenstrom mit dem vierten Kriterium übereinstimmt, Übertragen des zweiten einzelnen Datenstroms von dem vierten Funktionsblock (742) über den Kreuzpunktschalter.

5. Verfahren nach Ansprüchen 3 oder 4, wobei der erste Funktionsblock und der zweite Funktionsblock auf einem ersten feldprogrammierbaren Gate-Array, FPGA, angeordnet sind und wobei der dritte Funktionsblock (740; 840) und der vierte Funktionsblock (742) auf einem zweiten FPGA angeordnet sind, das von dem ersten FPGA getrennt ist.

6. Verfahren nach einem der Ansprüche 1-4, wobei die Logikfunktionsvorrichtung (830) erste und zweite Ports aufweist, wobei der erste Filter dem ersten Port zugeordnet ist und wobei der zweite Filter dem zweiten Port zugeordnet ist.

7. Verfahren nach einem der Ansprüche 1-6, wobei der erste und der zweite Filter jeweils dazu ausgebildet sind, in einer Taktdomäne zum Übertragen und zum Empfangen zu arbeiten.

8. Verfahren nach einem der Ansprüche 1-6, wobei der erste und der zweite Filter jeweils dazu ausgebildet sind, in mehreren Taktdomänen zu arbeiten.

9. Verfahren nach einem der Ansprüche 1-8, wobei die erste Kopie der Daten über einen ersten Transceiver zu dem ersten Funktionsblock gesendet wird und wobei die zweite Kopie der Daten über einen zweiten Transceiver zu dem zweiten Funktionsblock gesendet wird.

10. System, umfassend einen Kreuzpunktschalter (520; 820) und eine Logikfunktionsvorrichtung (530; 830) die einen ersten Funktionsblock und einen zweiten Funktionsblock umfasst, wobei
der Kreuzpunktschalter zu Folgendem ausgebildet ist:
Daten zu empfangen; und
die Daten an den ersten Funktionsblock und an den zweiten Funktionsblock zu Multicasten, indem eine erste Kopie der Daten zu dem ersten Funktionsblock und eine zweite Kopie der Daten zu dem zweiten Funktionsblock gesendet werden;
der erste Funktionsblock einen ersten Filter (536; 852) umfasst, der ein erstes Kriterium dafür aufweist, ob die erste Kopie der Daten an einen ersten Client adressiert ist, wobei der erste Filter dazu ausgebildet ist, die erste Kopie der Daten zu filtern;
der zweite Funktionsblock einen zweiten Filter (538; 854) umfasst, der ein zweites Kriterium dafür aufweist, ob die zweite Kopie der Daten an einen zweiten Client adressiert ist, wobei der zweite Filter dazu ausgebildet ist, die zweite Kopie der Daten zu filtern;
der erste Funktionsblock, der zu Folgendem ausgebildet ist:
wenn die erste Kopie der Daten an den ersten Client adressiert ist, die erste Kopie der Daten zu dem ersten Client (512) über den Kreuzpunktschalter zu übertragen; und
wenn die erste Kopie der Daten nicht an den ersten Client adressiert ist, die erste Kopie der Daten von dem ersten Funktionsblock zu dem ersten Client nicht zu übertragen; und
der zweite Funktionsblock, der zu Folgendem ausgebildet ist:
wenn die zweite Kopie der Daten an den zweiten Client adressiert ist, die zweite Kopie der Daten zu dem zweiten Client (514) über den Kreuzpunktschalter zu übertragen; und
wenn die zweite Kopie der Daten nicht an den zweiten Client adressiert ist, die zweite Kopie der Daten von dem zweiten Funktionsblock zu dem zweiten Client nicht zu übertragen.

11. System nach Anspruch 10, wobei
der Kreuzpunktschalter (820), der zu Folgendem ausgebildet ist:
zweite Daten von dem ersten Client und dritte Daten von dem zweiten Client zu empfangen;
die zweiten Daten zu einem dritten Funktionsblock (840) zu übertragen; und
die dritten Daten zu dem dritten Funktionsblock zu übertragen; und
der dritte Funktionsblock, der zu Folgendem ausgebildet ist: die zweiten Daten und die dritten Daten zu einem einzelnen Datenstrom zu multiplexen; und
den gemultiplexten Datenstrom über den Kreuzpunktschalter zu übertragen.

12. System nach Anspruch 11, wobei
der erste Funktionsblock und der zweite Funktionsblock auf einem ersten feldprogrammierbaren Gate-Array, FPGA, angeordnet sind; und
der dritte Funktionsblock (840) auf einem zweiten FPGA angeordnet ist, das von dem ersten FPGA getrennt ist.

13. System nach Anspruch 10, wobei
der Kreuzpunktschalter (820), der zu Folgendem ausgebildet ist
zweite Daten von dem ersten Client und dritte Daten von dem zweiten Client zu empfangen;
die zweiten Daten und die dritten Daten zu einem dritten Funktionsblock (840) zu übertragen; und
die zweiten Daten und die dritten Daten zu einem vierten Funktionsblock zu übertragen;
der dritte Funktionsblock dazu ausgebildet ist, die zweiten Daten und die dritten Daten zu einem ersten einzelnen Datenstrom zu multiplexen; und
der vierte Funktionsblock dazu ausgebildet ist, die zweiten Daten und die dritten Daten zu einem zweiten einzelnen Datenstrom zu multiplexen.

14. System nach Anspruch 13, wobei
der dritte Funktionsblock einen dritten Filter (850) umfasst, der ein drittes Kriterium aufweist, wobei der dritte Filter dazu ausgebildet ist, den ersten einzelnen Datenstrom zu filtern;
der vierte Funktionsblock einen vierten Filter umfasst, der ein viertes Kriterium aufweist, wobei der vierte Filter dazu ausgebildet ist, den zweiten einzelnen Datenstrom zu filtern;
der dritte Funktionsblock dazu ausgebildet ist, wenn der erste einzelne Datenstrom mit dem dritten Kriterium übereinstimmt, den ersten einzelnen Datenstrom über den Kreuzpunktschalter zu übertragen; und
der vierte Funktionsblock dazu ausgebildet ist, wenn der zweite einzelne Datenstrom mit dem vierten Kriterium übereinstimmt, den zweiten einzelnen Datenstrom über den Kreuzpunktschalter zu übertragen.

15. System nach Ansprüchen 13 oder 14, wobei
der erste Funktionsblock und der zweite Funktionsblock auf einem ersten feldprogrammierbaren Gate-Array, FPGA, angeordnet sind; und
der dritte Funktionsblock und der vierte Funktionsblock auf einem zweiten FPGA angeordnet sind, das von dem ersten FPGA getrennt ist.

## Revendications

1. Procédé de commutation de données, le procédé comprenant :
la réception, au niveau d'un commutateur matriciel (520 ; 820), de données ;
la multidiffusion, par le commutateur matriciel, des données depuis le commutateur matriciel vers un premier bloc de fonction dans un dispositif à fonctions logiques et vers un deuxième bloc de fonction dans le dispositif à fonctions logiques, dans lequel le premier bloc de fonction comprend un premier filtre, et le deuxième bloc de fonction comprend un deuxième filtre, dans lequel la multidiffusion des données comprend l'envoi d'une première copie des données au premier bloc de fonction et d'une deuxième copie des données au deuxième bloc de fonction ;
le filtrage de la première copie des données dans le premier filtre (536 ; 852) du dispositif à fonctions logiques, le premier filtre présentant un premier critère indiquant si la première copie des données est adressée à un premier client ;
si la première copie des données est adressée au premier client, la transmission de la première copie des données depuis le premier bloc de fonction au premier client (512) via le commutateur matriciel ;
si la première copie des données n'est pas adressée au premier client, la non transmission de la première copie des données depuis le premier bloc de fonction au premier client ;
le filtrage de la deuxième copie des données dans le deuxième filtre (538 ; 854) du dispositif à fonctions logiques, le deuxième filtre présentant un deuxième critère indiquant si la deuxième copie des données est adressée à un deuxième client ;
si la deuxième copie des données est adressée au deuxième client, la transmission de la deuxième copie des données depuis le deuxième bloc de fonction au deuxième client (514) via le commutateur matriciel ; et
si la deuxième copie des données n'est pas adressée au deuxième client, la non transmission de la deuxième copie des données depuis le deuxième bloc de fonction au deuxième client.

2. Procédé selon la revendication 1, comprenant en outre :
la réception, au niveau du commutateur matriciel (520 ; 820), de deuxièmes données provenant du premier client (512) et de troisièmes données provenant du deuxième client (514) **;**
la transmission, par le commutateur matriciel, des deuxièmes données depuis le commutateur matriciel à un troisième bloc de fonction (840) ;
la transmission, par le commutateur matriciel, des troisièmes données depuis le commutateur matriciel au troisième bloc de fonction,
le multiplexage, par le troisième bloc de fonction, des deuxièmes données et des troisièmes données en un flux de données unique ; et
la transmission, après multiplexage par le troisième bloc de fonction, du flux de données multiplexé via le commutateur matriciel.

3. Procédé selon la revendication 1, comprenant en outre :
la réception, au niveau du commutateur matriciel (520 ; 720 ; 820), de deuxièmes données provenant du premier client (512 ; 712) et de troisièmes données provenant du deuxième client (514 ; 714) ;
la transmission, par le commutateur matriciel, des deuxièmes données depuis le commutateur matriciel à un troisième bloc de fonction (740 ; 840) ;
la transmission, par le commutateur matriciel, des troisièmes données depuis le commutateur matriciel au troisième bloc de fonction ;
le multiplexage, par le troisième bloc de fonction, des deuxièmes données et des troisièmes données en un premier flux de données unique ;
la transmission, par le commutateur matriciel, des deuxièmes données depuis le commutateur matriciel à un quatrième bloc de fonction (742) ;
la transmission, par le commutateur matriciel, des troisièmes données depuis le commutateur matriciel au quatrième bloc de fonction ; et
le multiplexage, par le quatrième bloc de fonction, des deuxièmes données et des troisièmes données en un deuxième flux de données unique.

4. Procédé selon la revendication 3, comprenant en outre :
le filtrage du premier flux de données unique dans un troisième filtre (750 ; 850), le troisième filtre présentant un troisième critère ;
le filtrage du deuxième flux de données unique dans un quatrième filtre (752), le quatrième filtre présentant un quatrième critère ;
si le premier flux de données unique satisfait au troisième critère, la transmission du premier flux de données unique depuis le troisième bloc de fonction (740 ; 840) via le commutateur matriciel (520 ; 720 ; 820) ; et
si le deuxième flux de données unique satisfait au quatrième critère, la transmission du deuxième flux de données unique depuis le quatrième bloc de fonction (742) via le commutateur matriciel.

5. Procédé selon les revendications 3 ou 4, dans lequel le premier bloc de fonction et le deuxième bloc de fonction sont situés sur un premier réseau de portes programmables in situ, FPGA, et dans lequel le troisième bloc de fonction (740 ; 840) et le quatrième bloc de fonction (742) sont situés sur un deuxième FPGA séparé du premier FPGA.

6. Procédé selon l'une quelconque des revendications 1 à 4, dans lequel le dispositif à fonctions logiques (830) présente des premier et deuxième ports, dans lequel le premier filtre est dédié au premier port, et dans lequel le deuxième filtre est dédié au deuxième port.

7. Procédé selon l'une quelconque des revendications 1 à 6, dans lequel les premier et deuxième filtres sont chacun configurés pour fonctionner dans un domaine d'horloge pour la transmission et pour la réception.

8. Procédé selon l'une quelconque des revendications 1 à 6, dans lequel les premier et deuxième filtres sont chacun configurés pour fonctionner dans de multiples domaines d'horloge.

9. Procédé selon l'une quelconque des revendications 1 à 8, dans lequel la première copie des données est envoyée au premier bloc de fonction via un premier émetteur-récepteur et dans lequel la deuxième copie des données est envoyée au deuxième bloc de fonction via un deuxième émetteur-récepteur.

10. Système comprenant un commutateur matriciel (520 ; 820) et un dispositif à fonctions logiques (530 ; 830) comprenant un premier bloc de fonction et un deuxième bloc de fonction, dans lequel
le commutateur matriciel est configuré pour :
recevoir des données ; et
multidiffuser les données au premier bloc de fonction et au deuxième bloc de fonction en envoyant une première copie des données au premier bloc de fonction et une deuxième copie des données au deuxième bloc de fonction ;
le premier bloc de fonction comprend un premier filtre (536 ; 852) présentant un premier critère indiquant si la première copie des données est adressée à un premier client, le premier filtre étant configuré pour filtrer la première copie des données ;
le deuxième bloc de fonction comprend un deuxième filtre (538 ; 854) présentant un deuxième critère indiquant si la deuxième copie des données est adressée à un deuxième client, le deuxième filtre étant configuré pour filtrer la deuxième copie des données ;
le premier bloc de fonction est configuré pour :
si la première copie des données est adressée au premier client, transmettre la première copie des données au premier client (512) via le commutateur matriciel ; et
si la première copie des données n'est pas adressée au premier client, ne pas transmettre la première copie des données depuis le premier bloc de fonction au premier client ; et
le deuxième bloc de fonction est configuré pour :
si la deuxième copie des données est adressée au deuxième client, transmettre la deuxième copie des données au deuxième client (514) via le commutateur matriciel ; et
si la deuxième copie des données n'est pas adressée au deuxième client, ne pas transmettre la deuxième copie des données depuis le deuxième bloc de fonction au deuxième client.

11. Système selon la revendication 10, dans lequel
le commutateur matriciel (820) est configuré pour :
recevoir des deuxièmes données provenant du premier client et des troisièmes données provenant du deuxième client ;
transmettre les deuxièmes données à un troisième bloc de fonction (840) ; et
transmettre les troisièmes données au troisième bloc de fonction ; et
le troisième bloc de fonction est configuré pour : multiplexer les deuxièmes données et les troisièmes données en un flux de données unique ; et
transmettre le flux de données multiplexé via le commutateur matriciel.

12. Système selon la revendication 11, dans lequel
le premier bloc de fonction et le deuxième bloc de fonction sont situés sur un premier réseau de portes programmables in situ, FPGA ; et
le troisième bloc de fonction (840) est situé sur un deuxième FPGA séparé du premier FPGA.

13. Système selon la revendication 10, dans lequel
le commutateur matriciel (820) est configuré pour
recevoir des deuxièmes données provenant du premier client et des troisièmes données provenant du deuxième client ;
transmettre les deuxièmes données et les troisièmes données à un troisième bloc de fonction (840) ; et
transmettre les deuxièmes données et les troisièmes données à un quatrième bloc de fonction ;
le troisième bloc de fonction est configuré pour multiplexer les deuxièmes données et les troisièmes données en un premier flux de données unique ; et
le quatrième bloc de fonction est configuré pour multiplexer les deuxièmes données et les troisièmes données en un deuxième flux de données unique.

14. Système selon la revendication 13, dans lequel
le troisième bloc de fonction comprend un troisième filtre (850) présentant un troisième critère, le troisième filtre étant configuré pour filtrer le premier flux de données unique ;
le quatrième bloc de fonction comprend un quatrième filtre présentant un quatrième critère, le quatrième filtre étant configuré pour filtrer le deuxième flux de données unique ;
le troisième bloc de fonction est configuré pour, si le premier flux de données unique satisfait au troisième critère, transmettre le premier flux de données unique via le commutateur matriciel ; et
le quatrième bloc de fonction est configuré pour, si le deuxième flux de données unique satisfait au quatrième critère, transmettre le deuxième flux de données unique via le commutateur matriciel.

15. Système selon les revendications 13 ou 14, dans lequel
le premier bloc de fonction et le deuxième bloc de fonction sont situés sur un premier réseau de portes programmables in situ, FPGA ; et
le troisième bloc de fonction et le quatrième bloc de fonction sont situés sur un deuxième FPGA séparé du premier FPGA.
